# EUROPEAN PATENT SPECIFICATION

(11) **EP 1 580 091 B1**
(45) Date of publication and mention of the grant of the patent: **20.10.2010**
(21) Application number: 05251728.1
(22) Date of filing: 22.03.2005
(51) Int. Cl.: B60R 22/26, B60R 22/195, B60R 22/02

(54) **Belt pretensioner**
Gurtstraffer
Prétensionneur de ceinture

(30) Priority: 22.03.2004 EP 04251646; 11.06.2004 EP 04253510; 26.07.2004 EP 04254459
(43) Date of publication of application: 28.09.2005
(60) Divisional application: 07101690.1
(73) Proprietor: KEY SAFETY SYSTEMS, INC., Sterling Heights, MI 48314 (US)
(72) Inventor: Bell, John, Cumbria CA2 6QU (GB); Hunter, David, Cumbria CA2 4BH (GB); Jack, Brian A., Dumfiesshire DG12 6PR Scotland (GB); Blackadder, David, Cumria CA4 8QG (GB)
(74) Representative: W.P. Thompson & Co.

(56) References cited:
- WO-A-95/31359
- DE-A1- 2 234 246
- FR-A- 2 180 151
- FR-A- 2 855 126
- US-A1- 2002 105 181
- US-A1- 2003 137 140
- US-A1- 2004 212 188
- US-B1- 6 626 463

## Description

The present invention relates to a pretensioner and particularly to a pretensioner for a vehicle safety restraint mechanism such as a seat belt.

Traditionally a seat belt safety restraint comprises a length of belt webbing connected at three points to load bearing parts of a vehicle. Typically one end is bolted to a door sill on one side of the seat, arranged to pass laterally across the hips of the seat occupant to a buckle mechanism fixed to the vehicle on the opposite side of the seat, and then diagonally across the torso of the seat occupant, via a shoulder support to a retractor mounted on the B pillar adjacent the door. The buckle mechanism engages a buckle tongue slidably attached to the webbing.

The retractor fitted at the pillar end of the webbing increases the comfort for the seat occupant restrained by the belt and allows the webbing to pay out under relatively low loads to enable limited movement of the restrained seat occupant, for example to reach in-car entertainment controls or storage compartments. The retractor is biased to keep the webbing relatively taut about the seat occupant and a locking element is included to lock the retractor against webbing payout in the event of a dangerous situation being detected. For example, an acceleration sensor activates if the vehicle undergoes rapid acceleration or deceleration indicative of a crash.

In recent years, pretensioners have been introduced to rapidly pull in a length of webbing to actively tighten the belt about the vehicle occupant in the event of a crash. This takes up any slack which may have developed in the belt and helps to more correctly position the vehicle occupant in the seat to maximise the effect of the belt protection and of any secondary safety restraint such as an airbag.

Pretensioners comprise a force reservoir such as a pyrotechnically operated gas generator to provide an impulse of sufficient magnitude to tighten the belt in a short space of time, ideally before the crash pulse takes full effect. A typical known pretensioner may use rotational means to wind in a length of seat belt webbing, for example by rotating the retractor spool on the B pillar in a webbing rewind direction to take in the required length of webbing prior to the retractor locking against webbing payout. It is also known to tighten the belt using a pretensioner attached to the buckle mechanism such as is described in US 6 250 720 in which the buckle is pulled back in a vertical direction.

US6626463 discloses a seat belt device having a first seat belt tension increasing unit for increasing the tension of the seatbelt, and a second seat belt tension increasing unit for increasing the tension of the seat belt. When this seat belt device judges that the collision of a vehicle is unavoidable, it operates the first seat belt tension increasing unit before the collision and operates the second seat belt tension increasing unit when it detects the collision of the vehicle. Thereby, the passenger is reliably secured to the seat and his/her safety is ensured.

DE22234246 describes a seat belt pretensioning apparatus which uses a spring loaded mechanism to push one end of the seat belt in a tensioning direction along horizontal slot in the body of the vehicle in response to a collision detection.

US2004/212188 discloses a seat belt pretensioner including a pretensioner main body disposed at a side of a seat cushion, a moving connected to an end of a seat belt, a wire for connecting the pretensioner main body with the moving member, and a containing cover for covering the moving member and the wire. The pretensioner main body generates a tension force by reacting with a deceleration of a vehicle exceeding a constant value, the pretensioner main body. The wire transmits the tension force therethrough to the seat belt to pull the seat belt into the pretensioner main body. The containing cover includes a lower portion attached to the pretensioner main body and an upper portion having a through port for allowing the end of seat belt to pass therethrough.

FR2855126 describes a pretensioning device having a connection rail pivoted on a chassis of a vehicle such that the connection rail is movable with respect to the chassis. The rail is provided with a displacement unit e.g. pyrotechnic unit, that is adapted to displace the rail with respect to the chassis in case of collision of the vehicle. The rail is displaced to exert stress by a flexible strap on the abdomen of a passenger.

US 2003/137140 is the closest known prior art and discloses a vehicle occupant restraint system comprising a safety belt arrangement with a belt webbing, a belt buckle and one of an end- and deflection fitting. The restraint system further comprises two tracks with which a vehicle seat is connected and which, for displacement of the vehicle seat, are constructed for engagement into counter-tracks fixed to a floor of the vehicle. An elongated, rigid fastening element is provided which extends beneath the seat between the tracks and which is connected with both of the tracks. At least one belt tensioner is mounted to the fastening element.

It is desirable for pretensioner arrangements to be as compact as possible to save space without compromising the capability to pull in a sufficient length of the seat belt webbing in the event of a crash. However, known pretensioning arrangements tend to be bulky, and are particularly difficult to use for the front seats of a three-door vehicle because of the need to allow access to the rear of such a vehicle past the front seats. Using a traditional retractor pretensioner mechanism in a front seat of a three-door vehicle causes an unacceptable obstruction.

Seat travel is greater in a three-door vehicle than in a five-door vehicle in order to provide such access, and to accommodate this the door sill end of the webbing is usually attached to a so-called slider bar of well-known design, instead of being fixedly bolted to the floor. This allows the sill end of the webbing to be moved longitudinally forward and rearward to facilitate rear seat access and front seat movement.

It has been difficult to design suitable pretensioners for use with slider bars and/ or for use in three-door vehicles without obstructing the function of the slider bar or obstructing access to the rear seats.

The present invention provides an improved pretensioning arrangement.

According to the present invention there is provided a pretensioning arrangement for the sill end of a three point vehicle safety restraint seat belt, comprising: a fixed member adapted to be fixed to a door sill load bearing part of the vehicle; a movable member connected to the sill end of the seat belt, means for moving the movable member translationally relative to the fixed member, to move the sill end of the seat belt in a pretensioning direction in response to a signal from a crash sensor, and an elongate connecting member to which the sill end of the seat belt is slidably attached; wherein the means for moving comprises a piston-cylinder pretensioning unit having a piston housed within and movable along a cylinder and a force reservoir for driving the piston along the cylinder, and the movable member comprises a hollow cylindrical bobbin to which the sill end of the seat belt webbing is attached and the bobbin is arranged to slide along the connecting member translationally with respect to the fixed member and wherein the bobbin is arranged to move freely along the connecting member in normal use.

In this way the sill end of the belt is free to move along the connecting member when the seat belt is not under tension either from use in restraining a seat occupant and / or from a pretensioning operation.

The door sill end load bearing part of the vehicle is preferably a longitudinal chassis member adjacent a front door of the vehicle.

Preferably the movable member moves in a line generally parallel to the normal line of movement of the vehicle, i.e. the horizontal forwards-backwards line and moves horizontally.

Preferably the force reservoir comprises a gas generator which is pyrotechnically activated.

Preferably the sill end of the belt webbing is looped around the outer surface of the cylindrical bobbin.

The elongate connecting member preferably comprises the cylinder.

Preferably a flexible member attached at one end to the piston and at the other end in a releasable manner to one end of the cylinder and arranged, when released, to slide along the cylinder to push the bobbin in a pretensioning direction. The other end of the flexible member is preferably either attached to the cylinder by a shearable member or by a mechanically releasable member.

Preferably the pretensioning arrangement further comprising means for restraining motion of the movable member in a non-pretensioning direction. The restraining means preferably comprises ratchet teeth and at least one cooperating tooth in the movable member.

According to a further aspect of the invention there is provided a pretensioning arrangement comprising a belt webbing guide attached to a load bearing part of the vehicle and positioned to guide the webbing so that in the region of the pretensioning unit the webbing adopts a profile which is generally parallel to the line of force exerted by the pretensioning unit.

More space can be saved if the pretensioning unit is located under a vehicle seat.

Pretensioners can be constructed according to the invention which make access to rear seats easier, have smaller package sizes and which are attached to an appropriate sill anchorage zone.

For a better understanding of the present invention, and to show how the same may be carried into effect, reference will now be made, by way of example, to the accompanying drawings, in which:
Figure 1 is a schematic side view of a first illustrative example of a pretensioner;
Figure 2 is an enlarged view of part of the pretensioner of figure 1 before pretensioning;
Figure 3 is an enlarged view of part of the pretensioner of figure 1 after pretensioning;
Figure 4 is a side view of an alternative arrangement of the pretensioner of figure 1;
Figure 5 is an enlarged perspective view of the carriage and rail arrangement of figure 1;
Figure 6 is a schematic side view of a second illustrative example of a pretensioner;
Figure 7 is a side view of a third illustrative example of a pretensioner;
Figure 8 is a perspective view of the pretensioner of Figure 7;
Figure 9 is a perspective view of a fourth illustrative example of a pretensioner;
Figure 10 is a side view of a pretensioner according to a first embodiment of the present invention;
Figures 11A and 11B are side views of a fifth illustrative example of a pretensioner;
Figures 12A and 12B are side views of a pretensioner according to a second embodiment of the present invention;
Figure 13 is a side view of a front vehicle seat according to a further embodiment of the present invention;
Figures 14A and 14B are front views of a front vehicle seat according to another embodiment of the present invention.

As used herein and in the claims terms such as "forward" and "rearward", "front" and "back" and similar terms are understood to be correlated to the front and rear of a vehicle in which the seat belt pretensioning apparatus of the invention is installed. Furthermore, as used herein and in the claims terms such as "above" and "below", and "higher" and "lower" are understood to be correlated to the roof and floor of the passenger compartment of a vehicle in which the seat belt pretensioning apparatus of the invention is installed.

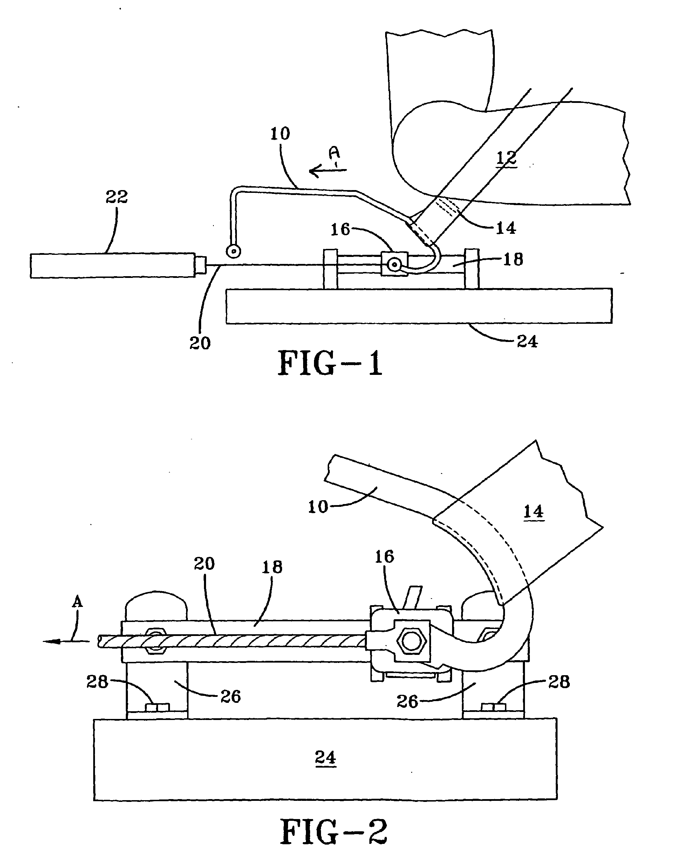

In the first illustrative example of figures 1 to 5, a slider bar 10 is positioned adjacent to a front seat 12 of a vehicle. The sill end of seat belt webbing 14 passes around the slider bar 10 and forms a loop thereon which is free to move substantially along the length of the slider bar 10. The end of the webbing 14 looped over the slider bar 10 is stitched as shown by the broken lines in figure 1.

The seat belt webbing 14 is of a conventional design and is attached at one end to a retractor mounted, adjacent a seat, to a load bearing part of the vehicle such as a vehicle side pillar also known as a B pillar (not shown). The webbing passes through a web guide also attached to the side pillar and has a buckle tongue, which is insertable into a buckle (not shown) located on the other side of the seat, in known manner.

When in use, and tensioned around a seat occupant, the seat belt webbing 14 is at the forward end of the slider bar 10 in the load bearing position shown in figure 1. When the seat belt is not in use the end of the webbing 14 may be moved in a rearward direction (relative to the normal direction of movement of the vehicle) as shown by arrow A, along the slider bar 10 so that it does not obstruct access through the door to the rear seat of a three-door vehicle.

The slider bar 10 is attached to a carriage 16 which is mounted on a rail 18. A cable 20 preferably of metal extends between the carriage 16 and a pyrotechnic pretensioning unit 22. The unit 22 is of a known type and contains a piston within a cylindrical housing and a gas generator. The gas generator is pyrotechnically activated to provide an impulse which forces the piston along the cylindrical housing, in the direction of arrow A in the example of figure 1, and pulls the cable 20, and hence moves the carriage 16 along the rail 18, pulling the seat belt 14 back in the direction of arrow A, i.e. in a pretensioning direction.

Figure 2 shows one arrangement of the carriage 16 and the rail 18 in greater detail. The rail 18 is attached at each end to support members 26 which are fixed to a load bearing member 24 by means of bolts 28. Such a load bearing member 24 may be a chassis member which typically extends in a longitudinal direction down each side of the vehicle, and is known as a load bearing door sill. This typically provides a suitable load bearing anchorage zone for the slider bar 10 adjacent to and slightly to the rear of each of the vehicle doors, in a known three-door vehicle.

Prior to pretensioning, the carriage 16 is positioned for normal use of the seat belt webbing 14 at its forwardmost position, at the right hand side as shown in figure 2 of the rail 18. When it senses an acceleration of the vehicle above a predetermined threshold, a crash sensor, in known manner, generates a signal indicative of a crash which causes the pyrotechnic gas generator of unit 22 to fire, creating a tension in the cable 20. The tension in the cable 20 pulls the carriage 16 and hence the slider bar 10 in the rearward pretensioning direction of arrow A. The carriage 16 can be arranged to move in the pretensioning direction a distance in the region of 50 to 150 mm depending upon the vehicle size and requirements.

The sudden movement of the slider bar 10 in the direction of arrow A pulls on the seat belt webbing 14, and takes up any slack in the webbing 14 so as to correctly position the vehicle occupant within the seat 12 in order to maximise the benefit of the seat belt and correctly position him for maximum effect of any secondary restraint such as an airbag.

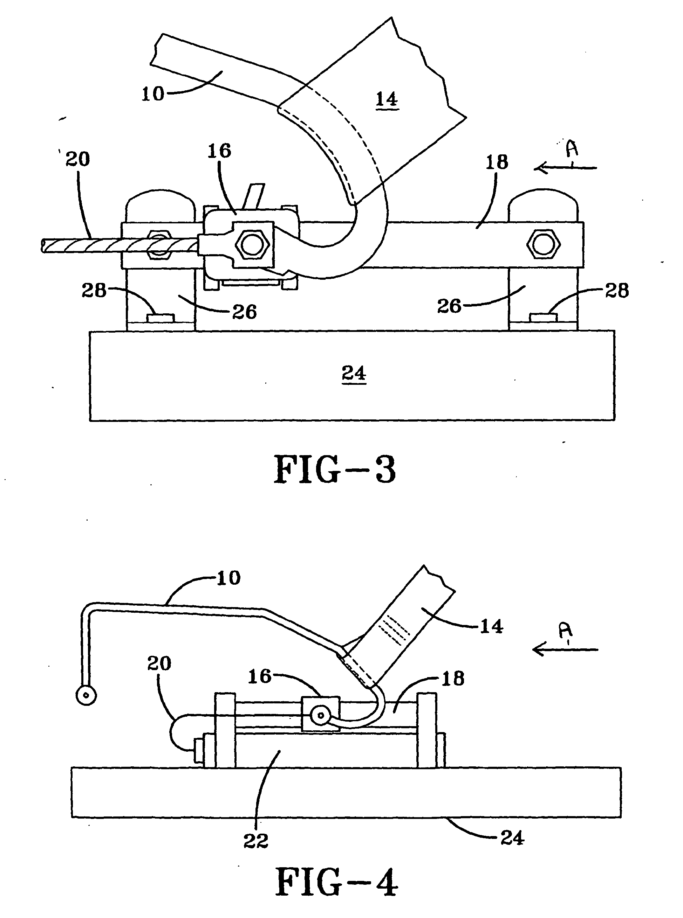

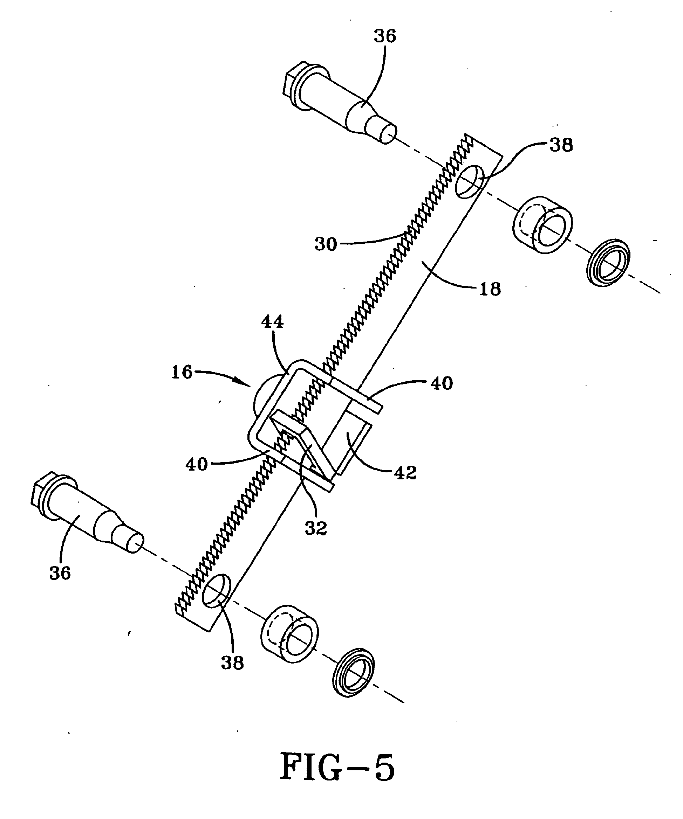

Figure 3 shows the position of the carriage 16 immediately after pretensioning. After the pyrotechnic unit 22 has fired, the carriage 16 is prevented from returning to its original position under the forward momentum of the vehicle occupant during a crash, by a ratchet mechanism which is shown more clearly in figure 5.

In figure 5 the rail 18 is attached at each of its ends to respective support members 26 by means of bolts 36 passing through cylindrical holes 38 at each end of the rail 18. Locking ratchet teeth 30 are formed in one surface of the rail 18. The carriage 16 has two end plates 40 and a base plate 42 attached to a side wall 44. A locking lever 32 extends from the base plate 42. Each of the end plates 40 and the locking lever 32 have a slot, allowing the rail 18 to pass through the centre of the carriage 16.

An inner surface of the locking lever 32 is in contact with the teeth 30 in the surface of the rail 18 and is orientated at an angle such that the locking lever 32 can pass over the teeth 30 in one direction. However the locking lever 32 is biased such that if it tries to move in the opposite direction, a locking edge of the inner surface of the locking lever 32 will be caught against a tooth 30 on the upper surface of the rail 18 and thus prevents the carriage 16 from sliding in a reverse direction. To facilitate this the teeth 30 may be of a saw-tooth form.

The slider bar 10, the carriage 16, the ratchet mechanism, the rail 18, the support members 26 and the bolts 28, 36 and 46 are all preferably made of metal. The ratchet mechanism and the carriage 16 may be formed in a similar manner to, or from, parts of a height adjuster traditionally used to alter the height of a belt web guide.

In figure 4 the pyrotechnic unit 22 is shown stored beneath the rail 18 and the bolts 36 and corresponding holes 38 in the rail may be used to fix the pyrotechnic unit 22 in relation to the rail 18. The operation of the pretensioner in figure 4 is substantially the same as that shown in figure 1, except that the cable 20 bends 180° in order to cater for the different orientation of the pyrotechnic unit 22.

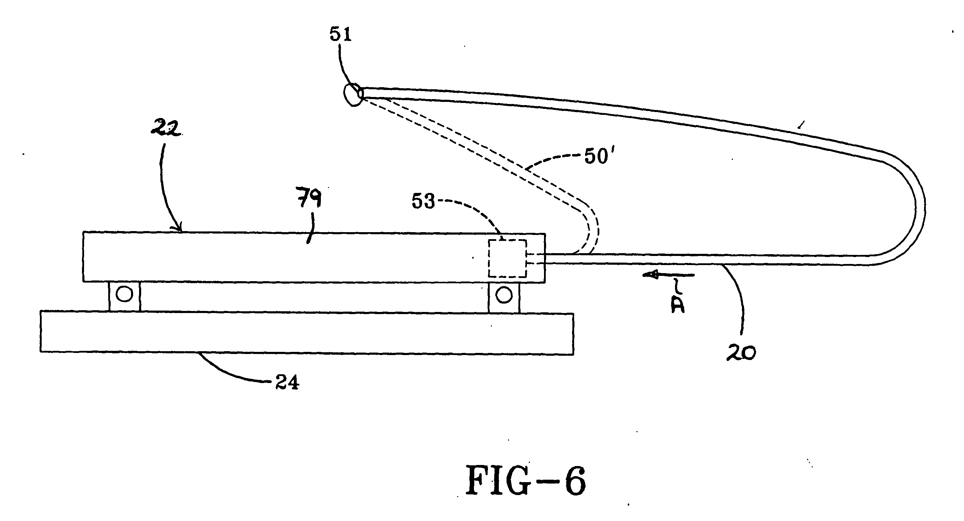

Figure 6 shows a second illustrative example in which the slider bar of the first example is effectively replaced by a flexible cable 20.

The seat belt webbing (not shown) is looped round the cable 20 in the same manner as with the slider bar 10 of figure 1 and the cable provides similar versatility of movement for the sill end of the webbing, and at least the same degree of access to rear seats.

One end 51 of the cable 20 is fixedly attached to a load bearing part of the vehicle such as the door sill, and the other end is attached to a piston 53 of a piston-cylinder pretensioning unit 22 which is also fixed to a load bearing part of the vehicle such as the door sill.

The cable 20 forms a loop profile as shown in figure 6 and can be encouraged to hold such a profile in normal use by retaining clips or by a plastic coating. Alternatively a flexible plastic tube may be used around the cable 20 to increase its effective stiffness to the appropriate degree to hold its profile.

When a crash sensor indicates that a sudden deceleration or acceleration is taking place, the pretensioning unit 22 is pyrotechnically activated and gas is released to push the piston 53 along the cylinder 79 in the direction of arrow A, causing the cable 20 to move to the profile indicated by the broken line 50'. This causes the seat belt webbing mounted on the cable 20 to be pulled back in the direction of arrow A thus effecting the required pretensioning exercise.

A ratchet, or other form of non-return mechanism may be built directly into the pretensioning unit 22 in known manner. For example saw tooth shaped projections may be built into the inside wall of the cylinder 79 and a cooperating tooth attached to the piston to allow the piston to move in the pretensioning direction A but not the opposite direction.

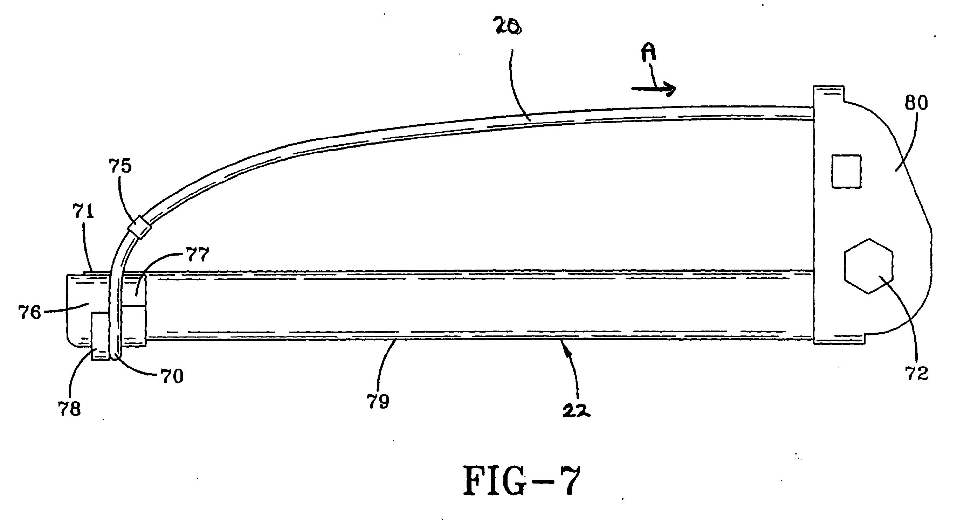

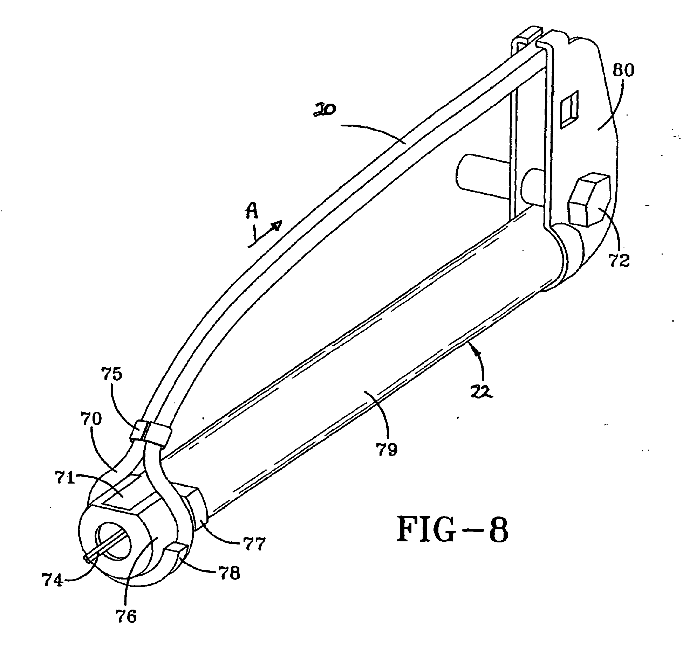

Figures 7 and 8 show a third example of the invention in which the cable 20 is formed as a double cable attached at one end to the piston in the cylinder 79 and at the other end formed as a loop 70 which is hooked over the end 71 of the cylinder 79 of the pretensioning unit 22. Figure 7 is a side view and figure 8 is a perspective view showing the loop 70 more clearly. shown. The direction in which the cable 20 is pulled to effect pretensioning is shown by arrow A. The loop 70 is fixed to the end 71 of the cylinder 79 by a shearable or mechanically releasable connection. In figures 7 and 8 this is illustrated in the form of a plastics attachment 76 fitted over the end 71 of the cylinder 79. Attachment 76 has restraining abutments 77 and 78 extending outwardly and restraining the cable 20 from moving along the cylinder 79. The abutment 77 shears when the cable 20 is subject to more than a predetermined force, releasing the cable loop 70 to slide along the cylinder 79 of the pretensioning unit. Other suitable forms of means for fixing the loop 70 to the end of the cylinder 79 will be evident to a person skilled in the art.

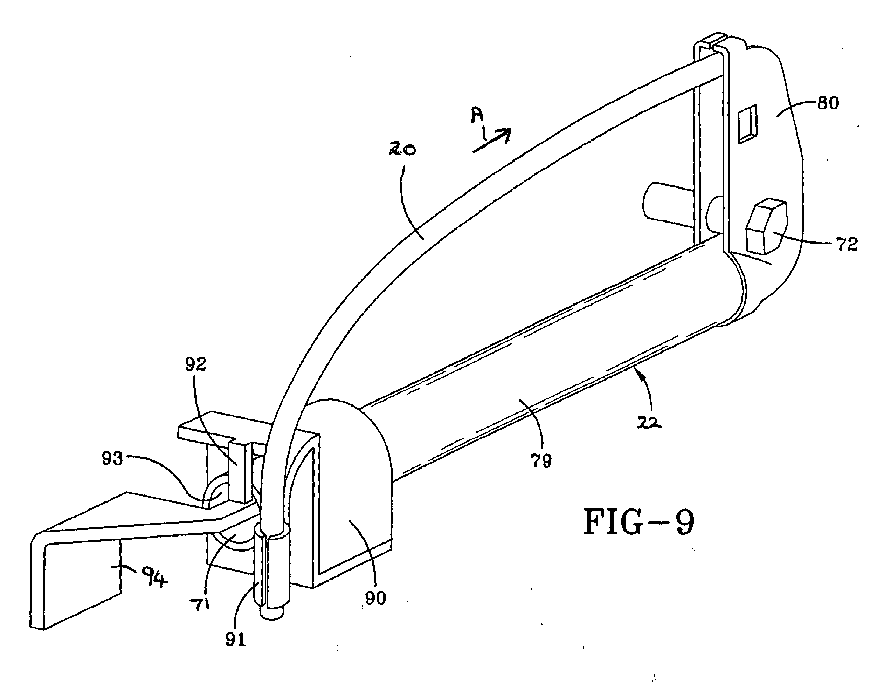

In figures 7 and 8 the pretensioning unit 22 is fixed to a load bearing part of a vehicle, such as a door sill by a bolt 72 engaging a mounting 80 at the piston end of the cylinder 79 (the opposite end to the position of the loop 70). The end 71 of the cylinder 79 must also be secured to a load bearing part of the vehicle, according to the standards of the Vehicle Anchorage Pull Test, currently known as the R14 specification, requiring it to be strong enough to withstand loads of at least 15kN. One such secure mounting is shown in figure 9 described below.

The cable loop 70 in figures 7 and 8 may be encased in a plastics tube so as to more easily slide along the cylinder 79. In addition a tie or plastics tube 75 holds the double cable 20 together. This plastics tube 75 may be longer than illustrated in figures 7 and 8 so as to also protect the fabric of a seat belt from chaffing by the cable. A pair of wires 74, shown exiting from the end 71 of the cylinder 79 are for actuation of the pretensioning unit 22 and could exit the cylinder at another point.

In Figure 9 a fourth illustrative example is shown in which the cable 20 is attached to a cradle 90 which will slide along the cylinder 79 when the pretensioner is activated. The cable 20 is fixed to the cradle 90 for example by welding in a housing 91 and the cradle 90 is retained at the end 71 of the pretensioning unit 22 by a tongue 92 on the cradle 90 abutting the end 71 of the cylinder 79. When the pretensioning unit 22 is activated, the sudden pull on the cable 20 shears this tongue 92 and allows the cradle 90 to travel along the cylinder 79, pulling the seat belt (not shown but attached to the cable 20) in a pretensioning direction as indicated by arrow A. Alternatively the tongue 92 can be arranged to bend to effect release of the cradle 90 from the recess 93. A further alternative would be to use a mechanically releasable mechanism.

In Figure 9 a bracket 94 is shown engaging the end 71 of the cylinder 79 and this bracket 94 can be bolted or screwed to a load bearing part of the vehicle.

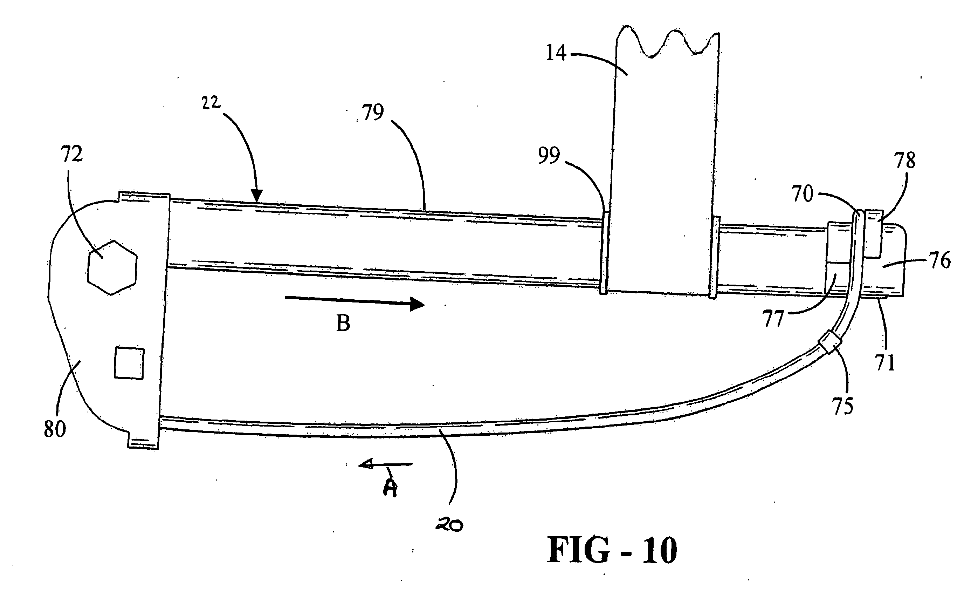

Figure 10 shows a first embodiment of the invention wherein the end of the seat belt 14 is mounted to the cylinder 79 of the pretensioning unit 22 rather than to the cable 20. This end of the webbing 14 is attached to a plastic bobbin 99, which is arranged to move freely along the cylinder 79 in normal use to provide access to rear seats. Thus in this embodiment, the cylinder 79 acts effectively as a slider bar.

When a crash sensor indicates that a sudden deceleration or acceleration is taking place, the pretensioning unit 22 is pyrotechnically activated to release gas to push the piston along the cylinder 79 (in the direction of arrow B) causing the cable 20 to disengage from the end 71 of the cylinder 79 thereby releasing the cable loop 70 to slide along the cylinder 79 in the direction of arrow A (opposite to arrow B). As the cable loop 70 moves along the cylinder 79 it forces the plastic bobbin 99 along the cylinder 79 thereby pulling the end of the webbing 14 in the pretensioning direction (arrow A).

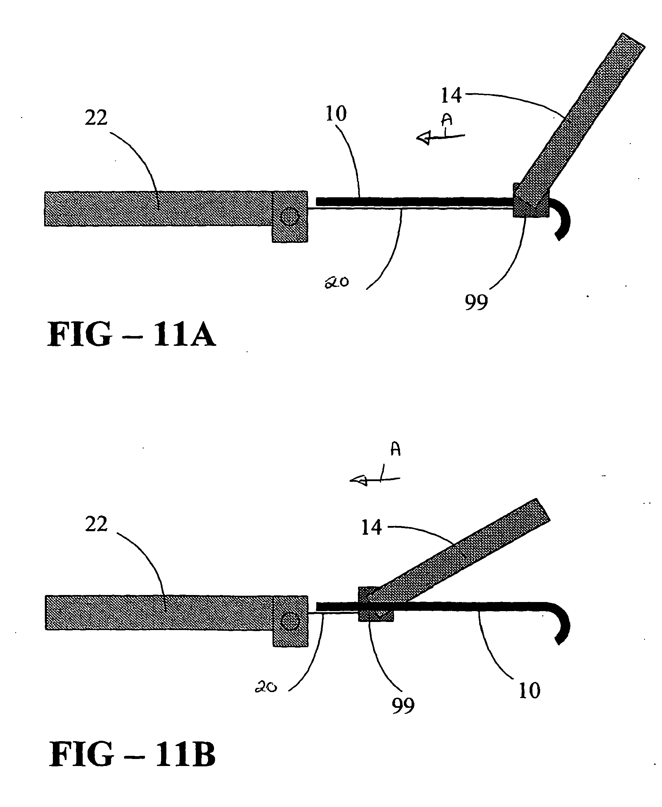

In figure 11A a pretensioning unit 22 is located at one end of the slider bar 10. The webbing 14 is mounted on a bobbin 99 on the slider bar 10 and in normal use, when restraining a seat occupant, will adopt the forward position shown in figure 11A, at the opposite end of the slider bar 10 to the pretensioning unit 22. A cable 20 connects the piston of the pretensioning unit 22 to the bobbin 99. When a crash sensor indicates that a sudden deceleration or acceleration is taking place, the pretensioning unit 22 is pyrotechnically activated to pull the cable 20 and thus the bobbin 99 and the webbing 14 in the pretensioning direction as shown by arrow A. Figure 11A shows the belt 14 in an unpretensioned position and figure 11B after pretensioning. Of course the pretensioning unit 22 could be mounted in any orientation, for example under or adjacent the slider bar to save space and cable guides could be fitted to avoid snagging.

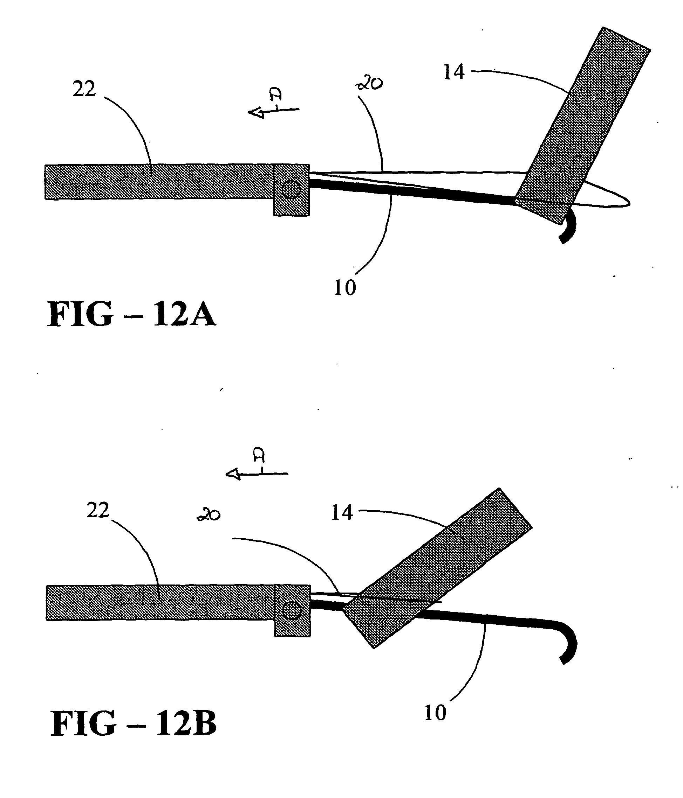

Figures 12A and 12B show a second embodiment of the present invention. The pretensioning unit 22 is located at one end of the slider bar 10 as in figures 11A and 11B. However in this embodiment the end of the webbing 14 is looped directly around the slider bar 10 so as to be freely movable along its length in normal use, to allow the seat belt webbing to be moved away from the vehicle door when access is required to rear seats in a three-door vehicle. The cable 20 is connected to the piston in the pretensioning unit 22 and forms a loop which surrounds the webbing 14 in the region of the slider bar 10. When a crash sensor indicates that a sudden deceleration or acceleration is taking place, the pretensioning unit 22 causes the looped cable 20 to be pulled in the direction A toward the cylinder of the pretensioning unit 22, to tighten around the webbing 14 and to pull the webbing back along the slider bar 10 in the pretensioning direction A to the pretensioned position shown in figure 12B.

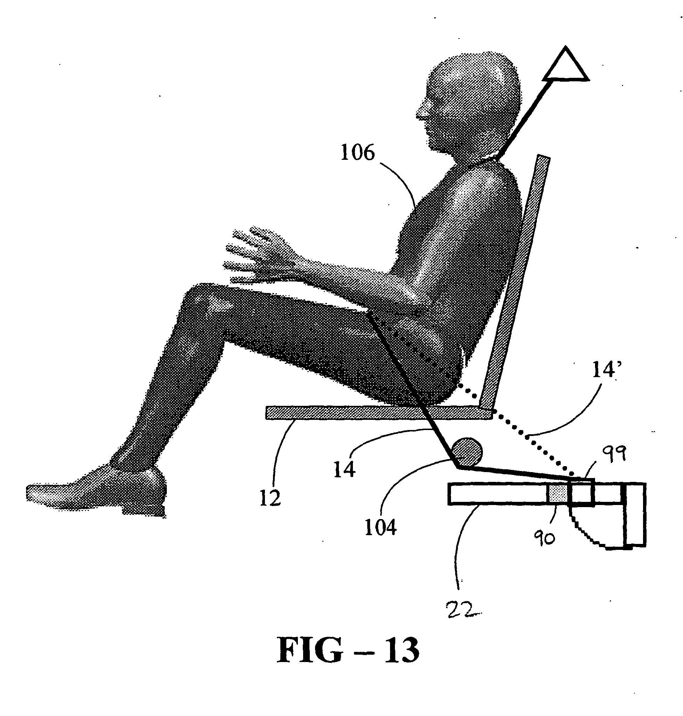

Figure 13 shows how a load bearing guide 104 can be used to increase the performance of a pretensioning arrangement which may be any one of the embodiments described above. A vehicle occupant 106 is shown sitting on a front seat 12 secured in position by a three-point seat belt 14 connected to the pretensioning unit 22, via a load bearing guide 104. The line of the webbing 14' without the guide 104 is shown in broken line and the webbing 14 with the guide 104 in solid line. The guide 104 makes the webbing 14 travel along a line more parallel and closer to the line of force exerted by the pretensioning unit 22, thereby increasing the performance, compared to the line of the webbing 14' without the load bearing guide 104. This increase in performance means that a physically shorter pretensioning unit 22 can be used to achieve the same pretensioning effect, i.e. to pull in the same length of webbing slack.

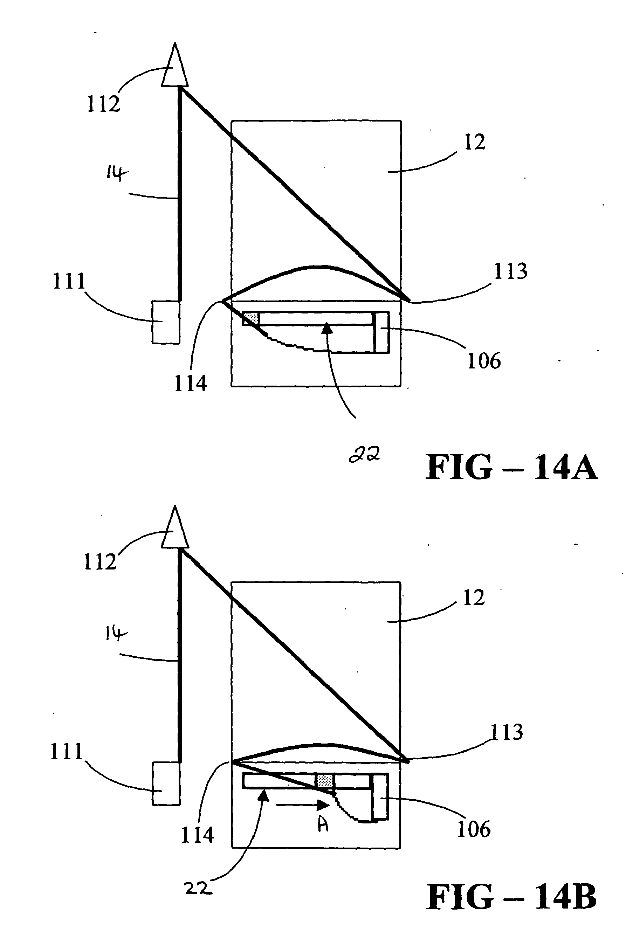

Figures 14A and 14B illustrate how further space can be saved by installing the pretensioning unit 22 under the seat 12. This can be used in three-door and five-door vehicles.

In figure 14A the vehicle seat 12 is fitted with a three-point seat belt. The webbing 14 passes from a retractor 111 upwardly to a web guide 112 on the B pillar. The webbing 14 then passes across the shoulder and torso of a seat occupant (not shown) to a buckle anchor point 113. Finally, the webbing 14 passes across the lap of the seat occupant to the sill anchor point 114 and is connected to the pretensioning unit 22 under the seat 12. The pretensioning unit 22 may be mounted to a load bearing part of the vehicle under the seat 12 or to the seat 12 itself and, as illustrated, takes the form of the embodiment of figures 6 to 9 although other forms and adaptations will be evident to persons skilled in the art. Figure 14B shows the same arrangement as figure 14A after pretensioning. The pretensioning unit 22 tensions the webbing 14 by pulling the end of the webbing 14 in the direction of arrow A and is capable of taking out up to 140mm of webbing slack.

Although not shown in figures 14A and 14B, a slider bar 10 can be incorporated or a cable used as a slider bar as in earlier described embodiments.

Of course elements of the embodiments described may be combined. For example the cable 20 could be attached to an arrangement such as the carriage 16 sliding on the rail 18, of figure 1. The pretensioning unit 22 could then be connected to the carriage 16 by another cable and be mounted either in line with, or below, the rail 18.

## Claims

1. A pretensioning arrangement for the sill end of a three point vehicle safety restraint seat belt, comprising:
a fixed member (80) adapted to be fixed to a door sill load bearing part (24) of the vehicle;
a movable member (99) connected to the sill end of the seat belt (14),
means for moving the movable member (99) translationally relative to the fixed member (80), to move the sill end of the seat belt in a pretensioning direction in response to a signal from a crash sensor, and
an elongate connecting member (79) to which the sill end of the seat belt (14) is slidably attached;
wherein the means for moving comprises a piston-cylinder pretensioning unit (22) having a piston (53) housed within and movable along a cylinder (79) and a force reservoir for driving the piston (53) along the cylinder (79), and the movable member comprises a hollow cylindrical bobbin (99) to which the sill end of the seat belt webbing (14) is attached and the bobbin (99) is arranged to slide along the elongate connecting member (79) translationally with respect to the fixed member and wherein the bobbin (99) is arranged to move freely along the elongate connecting member (79) in normal use.

2. A pretensioning arrangement according to claim 1 wherein the door sill load bearing part (24) of the vehicle is a longitudinal chassis member adjacent a front door of the vehicle.

3. A pretensioning arrangement according to claim 1 or claim 2 wherein the means for moving is operable to move the movable member in a line generally parallel to the normal line of movement of the vehicle.

4. A pretensioning arrangement according to any one of claims 1 to 3 wherein the means for moving is operable to move the movable member horizontally.

5. A pretensioning arrangement according any one of the preceding claims wherein the force reservoir comprises a gas generator which is pyrotechnically activated.

6. A pretensioning arrangement according to any one of the preceding claims wherein the sill end of the belt webbing is looped around the outer surface of the cylindrical bobbin (99).

7. A pretensioning arrangement according to any one of the preceding claims wherein the elongate connecting member comprises the cylinder (79).

8. A pretensioning arrangement according to claim 7 comprising a flexible member (20) attached at one end to the piston (53) and at the other end in a releasable manner to one end of the cylinder (79) and arranged, when released, to slide along the cylinder (79) to push the bobbin (99) in a pretensioning direction.

9. A pretensioning arrangement according to claim 8 wherein the other end of the flexible member (20) is attached to the cylinder (79) by a shearable member (77).

10. A pretensioning arrangement according to claim 8 wherein the other end of the flexible member (20) is attached to the cylinder (79) by a mechanically releasable member (90).

11. A pretensioning arrangement according to any one of the preceding claims further comprising means for restraining motion of the movable member (53) in a non-pretensioning direction.

12. A pretensioning arrangement according to claim 11 wherein the restraining means comprises ratchet teeth and at least one cooperating tooth in the movable member.

13. A pretensioning arrangement according to any one of the preceding claims further comprising a belt webbing guide attached to a load bearing part of the vehicle and positioned to guide the webbing (14) so that in the region of the pretensioning unit (22) it adopts a profile which is generally parallel to the line of force exerted by the pretensioning unit (22).

14. A pretensioning arrangement according to any one of the preceding claims wherein the pretensioning unit (22) is located under a vehicle seat.

## Patentansprüche

1. Gurtstrafferanordnung für den Schwellerabschluss eines Dreipunkt-Rückhaltesicherheitsgurtes eines Fahrzeuges, die aufweist:
ein stationäres Element (80), das für eine Befestigung an einem tragenden Türschwellerteil (24) des Fahrzeuges ausgebildet ist;
ein bewegliches Element (99), das mit dem Schwellerabschluss des Sicherheitsgurtes (14) verbunden ist;
ein Mittel für das Bewegen des beweglichen Elementes (99) translatorisch relativ zum stationären Element (80), um den Schwellerabschluss des Sicherheitsgurtes in einer Gurtstraffrichtung als Reaktion auf ein Signal von einem Aufprallsensor zu bewegen; und
ein längliches Verbindungsglied (79), an dem der Schwellerabschluss des Sicherheitsgurtes (14) verschiebbar befestigt ist;
wobei das Mittel für das Bewegen eine Kolben-Zylinder-Gurtstraffereinheit (22) mit einem Kolben (53), der innerhalb eines Zylinders (79) aufgenommen wird und längs dieses beweglich ist, und einem Kraftreservoir für das Antreiben des Kolbens (53) längs des Zylinders (79) aufweist, und wobei das bewegliche Element eine hohle, zylindrische Trommel (99) aufweist, an der der Schwellerabschluss des Sicherheitsgurtbandes (14) befestigt ist, und wobei die Trommel (99) angeordnet ist, um sich längs des länglichen Verbindungsgliedes (79) translatorisch mit Bezugnahme auf das stationäre Element zu verschieben, und wobei die Trommel (99) angeordnet ist, um sich beim normalen Gebrauch längs des länglichen Verbindungsgliedes (79) frei zu bewegen.

2. Gurtstrafferanordnung nach Anspruch 1, bei der das tragende Türschwellerteil (24) des Fahrzeuges ein Fahrgestellelement in Längsrichtung benachbart einer Vordertür des Fahrzeuges ist.

3. Gurtstrafferanordnung nach Anspruch 1 oder Anspruch 2, bei der das Mittel für das Bewegen funktionsfähig ist, um das bewegliche Element in einer Richtung im Allgemeinen parallel zur normalen Bewegungsrichtung des Fahrzeuges zu bewegen.

4. Gurtstrafferanordnung nach einem der Ansprüche 1 bis 3, bei der das Mittel für das Bewegen funktionsfähig ist, um das bewegliche Element horizontal zu bewegen.

5. Gurtstrafferanordnung nach einem der vorhergehenden Ansprüche, bei der das Kraftreservoir einen Gasgenerator aufweist, der pyrotechnisch aktiviert wird.

6. Gurtstrafferanordnung nach einem der vorhergehenden Ansprüche, bei der der Schwellerabschluss des Gurtbandes um die Außenfläche der zylindrischen Trommel (99) herum in Schleifen gelegt wird.

7. Gurtstrafferanordnung nach einem der vorhergehenden Ansprüche, bei der das längliche Verbindungsglied den Zylinder (79) aufweist.

8. Gurtstrafferanordnung nach Anspruch 7, die ein elastisches Element (20) aufweist, das an einem Ende am Kolben (53) und am anderen Ende in einer freigebbaren Weise an einem Ende des Zylinders (79) befestigt und so angeordnet ist, dass es sich, wenn es freigegeben wird, längs des Zylinders (79) verschiebt, um die Trommel (99) in eine Gurtstraffrichtung zu drücken.

9. Gurtstrafferanordnung nach Anspruch 8, bei der das andere Ende des elastischen Elementes (20) am Zylinder (79) mittels eines scherbaren Elementes (77) befestigt ist.

10. Gurtstrafferanordnung nach Anspruch 8, bei der das andere Ende des elastischen Elementes (20) am Zylinder (79) mittels eines mechanisch freigebbaren Elementes (90) befestigt ist.

11. Gurtstrafferanordnung nach einem der vorhergehenden Ansprüche, die außerdem ein Mittel für das Einschränken der Bewegung des beweglichen Elementes (53) in einer Nichtgurtstraffrichtung aufweist.

12. Gurtstrafferanordnung nach Anspruch 11, bei der das Mittel für das Einschränken Sperrzähne und mindestens einen zusammenwirkenden Zahn im beweglichen Element aufweist.

13. Gurtstrafferanordnung nach einem der vorhergehenden Ansprüche, die außerdem eine Gurtbandführung aufweist, die an einem tragenden Teil des Fahrzeuges befestigt und positioniert ist, um das Band (14) zu führen, so dass sie im Bereich der Gurtstraffereinheit (22) ein Profil annimmt, das im Allgemeinen parallel zur Richtung der Kraft verläuft, die durch die Gurtstraffereinheit (22) ausgeübt wird.

14. Gurtstrafferanordnung nach einem der vorhergehenden Ansprüche, bei der die Gurtstraffereinheit (22) unter einem Fahrzeugsitz angeordnet ist.

## Revendications

1. Dispositif de prétension pour l'extrémité de longeron d'une ceinture de sécurité à trois points de fixation, comprenant :
un élément fixe (80), adapté pour être fixé sur une partie de support de la charge d'un seuil de porte (24) du véhicule ;
un élément mobile (99) connecté à l'extrémité de longeron de la ceinture de sécurité (14) ;
un moyen pour déplacer l'élément mobile (99) par translation par rapport à l'élément fixe (80), pour déplacer l'extrémité de longeron de la ceinture de sécurité dans une direction de prétension, en réponse à un signal transmis par un capteur de collision ; et
un élément de connexion allongé (79), sur lequel est fixée de manière coulissante l'extrémité de longeron de la ceinture de sécurité (14) ;
le moyen de déplacement comprenant une unité de prétension à piston et cylindre (22), comportant un piston (53) logé dans un cylindre (79) et pouvant être déplacé le long de celui-ci, et un réservoir de force pour entraîner le piston (53) le long du cylindre (79), l'élément de déplacement comprenant une bobine cylindrique creuse (99) sur laquelle est fixée l'extrémité de longeron de la sangle de la ceinture de sécurité (14), la bobine (99) étant agencée de sorte à glisser par translation le long de l'élément de connexion allongé (79) par rapport à l'élément fixe, la bobine (99) étant agencée de sorte à se déplacer librement le long de l'élément de connexion allongé (79) pendant une utilisation normale.

2. Dispositif de prétension selon la revendication 1, dans lequel la partie de support de la charge du seuil de porte (24) du véhicule est un élément de châssis longitudinal adjacent à une porte avant du véhicule.

3. Dispositif de prétension selon les revendications 1 ou 2, dans lequel le moyen de déplacement sert à déplacer l'élément mobile dans une ligne généralement parallèle à la ligne normale du déplacement du véhicule.

4. Dispositif de prétension selon l'une quelconque des revendications 1 à 3, dans lequel le moyen de déplacement sert à déplacer l'élément mobile dans une direction horizontale.

5. Dispositif de prétension selon l'une quelconque des revendications précédentes, dans lequel le réservoir de force comprend un générateur de gaz actionné de manière pyrotechnique.

6. Dispositif de prétension selon l'une quelconque des revendications précédentes, dans lequel l'extrémité de seuil de la sangle de la ceinture de sécurité est enroulée en boucle autour de la surface externe de la bobine cylindrique (99).

7. Dispositif de prétension selon l'une quelconque des revendications précédentes, dans lequel l'élément de connexion allongé comprend le cylindre (79).

8. Dispositif de prétension selon la revendication 7, comprenant un élément flexible (20) fixé au niveau d'une extrémité sur le piston (53) et au niveau de l'autre extrémité de manière amovible sur une extrémité du cylindre (79) et agencé, lors de son dégagement, de sorte à glisser le long du cylindre (79), pour pousser la bobine (99) dans une direction de prétension.

9. Dispositif de prétension selon la revendication 8, dans lequel l'autre extrémité de l'élément flexible (20) est fixée sur le cylindre (79) par un élément cisaillable (77).

10. Dispositif de prétension selon la revendication 8, dans lequel l'autre extrémité de l'élément flexible (20) est fixée sur le cylindre (79) par un élément à dégagement mécanique (90).

11. Dispositif de prétension selon l'une quelconque des revendications précédentes, comprenant en outre un moyen pour limiter le déplacement de l'élément mobile (53) dans une direction de non prétension.

12. Dispositif de prétension selon la revendication 11, dans lequel le moyen de limitation comprend des dents d'encliquetage et au moins une dent à coopération dans l'élément mobile.

13. Dispositif de prétension selon l'une quelconque des revendications précédentes, comprenant en outre un guide de la sangle de la ceinture fixé sur une partie de support de la charge du véhicule, et positionné de sorte à guider la sangle (14), celle-ci adoptant ainsi dans la région de l'unité de prétension (22) un profil généralement parallèle à la ligne de force exercée par l'unité de prétension (22).

14. Dispositif de prétension selon l'une quelconque des revendications précédentes, dans lequel l'unité de prétension (22) est agencée au-dessous d'un siège du véhicule.
